# EUROPEAN PATENT SPECIFICATION

(11) **EP 2 979 223 B1**
(45) Date of publication and mention of the grant of the patent: **09.09.2020**
(21) Application number: 14715088.2
(22) Date of filing: 27.03.2014
(51) Int. Cl.: G06F 21/64, G06F 16/23, G06F 16/93, G06F 16/245

(54) **DOCUMENT TAMPER DETECTION**
ERKENNUNG VON DOKUMENTENMANIPULATION
DÉTECTION DE FALSIFICATION DE DOCUMENT

(30) Priority: 28.03.2013 GB 201305716
(43) Date of publication of application: 03.02.2016
(73) Proprietor: Smartcomms SC Limited, Centennial Park Elstree Hertfordshire WD6 3SY (GB)
(72) Inventor: MCLENNAN, James, Soho London W1F 0DJ (GB)
(74) Representative: Avidity IP
(86) International application number: PCT/GB2014/050983
(87) International publication number: WO 2014/155124

(56) References cited:
- AU-B2- 720 583
- US-A- 5 694 569
- US-A1- 2003 126 400
- US-A1- 2003 212 893
- US-A1- 2008 177 799
- US-A1- 2009 193 256

## Description

### Field of the Invention

The present invention relates to electronic documents. In particular it relates to tamper detection for electronic documents.

### Background of the Invention

It is increasingly necessary for multiple entities to create, access and modify electronic documents in numerous and potentially disparate ways. For example, document sharing can allow users to access a single document in such a way that multiple users can access, view and edit the document in a synchronised fashion. Similarly, document facilities provided on a 'software as a service' (SaaS) basis, such as cloud-based document management services, provide for shared document handling by potentially many users. Such services can allow the creation, storage and modification of electronic documents in a networked computer environment including, inter alia, textual, graphical, spreadsheet, database and composite documents. Documents may not need to be stored local to users and are instead provided in a storage agnostic manner to potentially multiple users engaged with the service. Cloud based solutions include Google Drive (Google is a registered trademark of Google Inc.) and Microsoft Office 365 (Microsoft and Office 365 are registered trademarks of Microsoft Corp.)

By allowing multiple users to create, access and modify documents in a shared document handling system it is necessary to record modifications in such a manner that document changes can be synchronised, reconciled and potentially reviewed and audited. Further, documents can be created, accessed and modified via many and disparate devices and facilities for accessing the shared document handling service. For example, electronic documents can be accessed by users or entities via personal computing devices, tablet devices, smartphone devices, shared terminals, internet connected devices, web browser devices, devices utilising many and various operating systems including generic, open source, proprietary and embedded operating systems, and conceivably many other types of physical, virtual or software means in communication with the shared document handling system. The services and functionality offered by these devices and facilities can vary. In particular, a level of security provided by different facilities can vary. Effective and accurate tracking of document handling relies on a level of security provided by a facility accessing the document handling system.

Some software and hardware facilities for accessing document handling systems are known to have security weaknesses open to exploitation. For example, documents accessed by javascript code executing in a browser on a client computer system accessing a document handling service is susceptible to weaknesses in client-side javascript technology. A determined user could access an electronic document and functionality for handling the document via a browser javascript console. Modifications made to a document in such a way may not be identifiable to other users accessing the document and/or may not be attributable to a user making such modification. Where documents hold sensitive, critical, financial, personal, confidential or other similar material, : such modifications can be detrimental and represent a considerable challenge when providing shared document services across a networked environment to multiple disparate clients. US 2008/177799 A1 (Wilson Kelce S), AU 720 583 B2 (Fischer Addison M) and US2003/212893 (Hind John R) describe such systems and methods for document assessment.

It would therefore be advantageous to provide a shared document handling system without the aforementioned disadvantages.

### Summary of the Invention

The present invention is defined by the appended independent claims. It provides, in a first aspect, a computer implemented method for identifying tampering of an electronic document as claimed in claim 1 below.

The new document digest generated and the validation digest are suitable for use to identify tampering of the modified version of the document. The validation digest is based on an original document digest whereas the new document digest is based on the modification records and the additional modification records. Any tampering with the modification records is apparent from a comparison of the validation digest and the new document digest. Thus, in this way, the method is suitable for identifying tampering of the electronic document by the document modifier.

Preferably, the modification records and the additional modification records are ordered such that the modification records and additional modification records define a state of the document.

Preferably the document modifier is a client computing device operable to render and edit the document.

Preferably the document digest, new document digest and validation digest are generated using a hashing algorithm.

Preferably the comparing step determines if the document has been tampered with based on identifying a difference between the new document digest and the validation digest.

Preferably the document is stored at a document server.

Preferably the document modifier is communicatively connected to the document server.

Preferably the document is stored in a cloud computing facility and the document modifier is communicatively connected to the cloud computing facility.

The present invention accordingly provides, in a second aspect, an apparatus for identifying tampering of an electronic document, the document having associated one or more modification records, the apparatus comprising: a modification record digest generator for generating a digest for a 6. modification record of the document as claimed in claim

The present invention may provide, in a third aspect, an apparatus comprising: a central processing unit; a memory subsystem; an input/output subsystem; and a bus subsystem interconnecting the central processing unit, the memory subsystem, the input/output subsystem; and the apparatus as described above.

The present invention accordingly provides, in a fourth aspect, a computer program element comprising computer program code to, when loaded into a computer system and executed thereon, cause the computer to perform the steps of a method as described above.

### Brief Description of the Drawings

A preferred embodiment of the present invention is described below in more detail, by way of example only, with reference to the accompanying drawings, in which:
Figure 1 is a block diagram of a computer system suitable for the operation of embodiments of the present invention;
Figure 2 is a component diagram illustrating components configured for tampering tampering of an electronic document in accordance with a preferred embodiment of the present invention;
Figure 3 is a flowchart of a method for identifying tampering of an electronic document in accordance with a preferred embodiment of the present invention;
Figure 4 illustrates a document transformation in accordance with a preferred embodiment of the present invention;
Figure 5 is a flow diagram illustrating the interaction between a document modifier and a server for the modification and validation of a document in accordance with a preferred embodiment of the present invention;
Figure 6a depicts modification records and generated digests for a document in accordance with a preferred embodiment of a present invention; and
Figure 6b depicts modification records, an additional modification record and generated digests for a modified version of a document in accordance with a preferred embodiment of the present invention.

### Detailed Description of the Preferred Embodiments

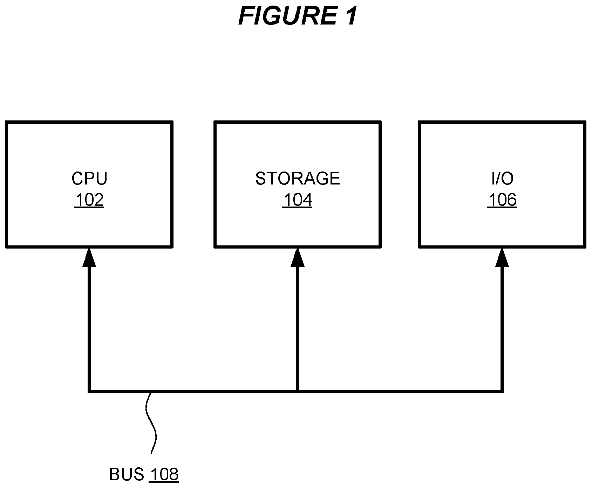

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

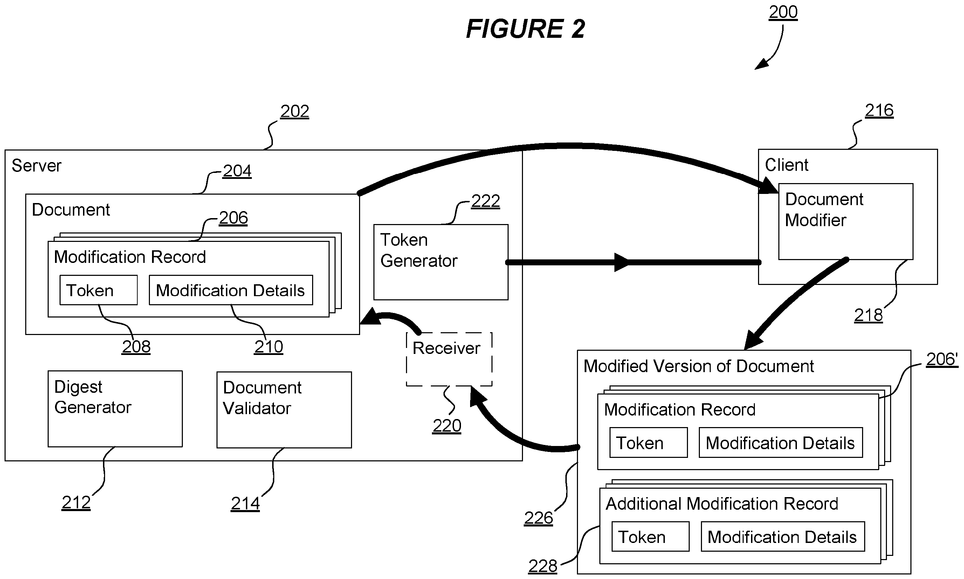

Figure 2 is a component diagram illustrating components configured for identifying tampering of an electronic document 204 in accordance with a preferred embodiment of the present invention. A server 202 is a hardware or software entity operable to store, therein or in association with, an electronic document 204. Electronic document 204 is a representation of a document such as a textual, graphical, mathematical, database or other document, including composites thereof. Alternatively or additionally, document 204 can be document specified, defined or characterised by or in a document specification mechanism, such as a document specification language, one or more data structures, semantic definitions or one or more markup languages. For example, document 206 can be a document expressed in XML, HTML, a proprietary document definition mechanism such as a Microsoft Word document (Microsoft and Microsoft Word are trademarks of Microsoft Corp.), an open document format such as ODF or any other suitable mechanism for defining a document for storage in association with server 202.

A state of the document 206 is defined by way of one or more modification records 206 each including modification details 210 defining a modification to the document 204. For example, modifications can be defined to include the addition or deletion of content, elements, components or parts of the document 204. More sophisticated modifications can be conceived, including modifications to style, format, location, position, rendering, visibility or any number of other states of elements, components or parts of the document 204, as will be apparent to those skilled in the art. The modification records 210 cumulatively define a state of the document 204. Preferably, the modification documents 206 are ordered such that the cumulative effect of applying modifications represented by the modification details 210 of each modification record 206 serves to characterise the document 204 in a state corresponding to a version of the document, the state resulting from the effect of the such modifications. In one embodiment, the document 204 is defined by the modifications 206 such that a blank document, as a starting state of the document 204, is modified in accordance with the modification records 206 in order of modification. Thus, in such an embodiment, the document is essentially represented by the cumulative effect of its modification records 206. In an alternative embodiment, the modification records 206 reflect modifications to the document 204 being otherwise stored or defined in a data structure, format or by other such suitable means, including those contemplated hereinbefore.

The server 202 further includes a digest generator 212 as a software or hardware component suitable for generating a digest for an input parameter. A digest, also known as a hash, is a data item generated for a variable length input parameter. The digest is generated using an algorithm or machine such that a likelihood of two disparate input parameters generating an identical digest is small. Examples of suitable hashing algorithms include message digest algorithms including MD2, MD3, MD4, MD5, MD6, secure hash algorithms such as SHA1, SHA224, SHA256, SHA384, SHA512, SHA3, a BLAKE algorithm, an elliptic curve only hash algorithm (ECOH), a spectral hash algorithm, hash algorithms based on fast fourier transforms or any other suitable algorithm for generating a digest as will apparent to those skilled in the art.

The server 202 is suitable for operation with one or more clients 216. Client 216 is a hardware or software entity including a document modifier 218 for the modification of the document 204. For example, the client can be a device such as a computer, smartphone, tablet or other device or a software component or components operating on a generalised or dedicated device. The document modifier 218 is a hardware or software entity operable to modify the document 204 to create a modified version of the document 226, or conceivably create a new document 226, such as by inserting, removing, transforming, appending, adjusting or otherwise modifying document 204. In one embodiment, the document modifier 218 is a document editor such as a word processor, spreadsheet application, document design and creation application, graphical design software, desktop publishing software, web design application, XML document editor, cloud based document editor or any other suitable hardware or software component suitable for editing the document. Preferably, the document modifier 218 is operable to render the document 204, such as by displaying a view of the document on an output device of the client 216 such as a screen. The document 204 may be rendered by interpreting, compiling or otherwise processing a definition of the document 204, such as a document specification language definition. In one embodiment the document 204 is rendered by cumulative application of the one or more modification records 206 associated with the document 204 so as to articulate a state of the document 204 as a product of its past modifications. In use, a user or other entity modifies the document 204 via the document modifier 218, such as via a user interface of the modifier 218 having facilities as may be provided by user interface controls and the like. The modifier 218 generates one or more additional modification records 228 associated with a modified version of the document 226, each of the additional modification records 226 corresponding to a modification to the document 204 applied via the modifier 218. The modified version 226 is communicated to the server 202 with the (original) modification records 206 and the additional modification records 228. For example, where the document 204 is a word processing document including rich text and the document modifier 218 is a cloud-based word processing application, a user using a client computing device 216, such as a tablet computer, edits the document 204 by adding and/or removing textual (or other) content. Each edit made by the user is reflected by a corresponding additional modification record 228 generated by the document modifier 218 and communicated to the server 202 with the modified version of the document 226.

Modification records 206 and additional modification records 228 reflect modifications to the document 204 and are recorded at a level of granularity such that each modification record 206, 228 corresponds to a discrete modification. It will be appreciated by those skilled in the art that the level of granularity of the modification records 206, 228 is selected or configurable so as to offer a record of modifications to the document 204 that balances efficiency of recording modifications against effectiveness of the validation techniques described here. In particular, considerations such as the volume of modification records 206, 228 generated for a frequently or heavily modified document and the effectiveness of the validation technique will be considered by those skilled in the art when adopting an appropriate level of granularity.

The client 216 and the server 202 are in communication such as by virtue of coexistence on a common platform, such as a common computing device or a common computing service such as a cloud computing platform, a common network, a common operating system or a common operating environment. Alternatively, the client 216 and the server 202 can be interconnected by virtue of a network connection such as a wired or wireless, direct or indirect, open or closed network including the internet and facilities for accessing such networks, howsoever arranged.

In use the document 204 is made available to the document modifier 218. This can be achieved by transferring a copy of the document 204 to the document modifier 218 in order that the document modifier 218 can access and modify the document 204. Alternatively, the document 204 can be accessed by the document modifier 218 at a location remote to the document modifier 218 but nonetheless accessible to the document modifier 218, such as via a communication link including a network connection. While the document 204 is illustrated as being comprised within the server 202, it will be appreciated by those skilled in the art that the document 204 may reside, be stored, be defined or comprised at a location or plurality of locations that are entirely or partly external to the server 202, such as a document server. In some embodiments, the document 204 is stored in a dedicated store external to, and in communication with, the server 202, the client 216 and the modifier 218. For example, the document can be stored in a cloud computing facility communicatively connected to the server 202, the client 216 and the modifier 218. Alternatively, storage of the document 204 can be spread across multiple storage locations on potentially multiple storage devices. Such storage in multiple locations can arise where the document 204 is divided into parts, sections or pieces for storage, or where the document is stored logically or physically multiple times for reasons of redundancy, security or reliability, for example. Further, while the document 204 and modified version of the document 226 are illustrated and described as being separate and communicated between the client 216 and server 202, it will be appreciated by those skilled in the art that the document 204 may not be so communicated and may equally be accessed by both the client 216 and server 202 in situ or in its storage arrangement. Similarly, while the modified version 226 is illustrated as separate to, and distinct from, the document 204, it will be appreciated by those skilled in the art that the modified version 226 may be an evolution to, modification of, later version of or revised version of the document 204 and are logically or physically the same document distinguished by modifications made by the modifier 218. It will be appreciated by those skilled in the art that such many and various approaches to storage of the document 204 and modified version 226 do not detract from the operability of embodiments of the present invention or the advantages thereof.

During and/or on completion of modification of the document 204 by the document modifier 218, a modified version of the document 226 corresponding to the document 204 with modifications made via the modifier 218 is communicated to the server 202 for receipt by a receiver 220 of the server 202. Such a modified version 226 has associated additional modification records 228 being modification records additional to the modification records 206 stored in association with the document 204 before modification by the modifier 218. The modified version 226 thus includes both modification records 206' and the additional modification records 228. The receiver 220 is a software or hardware component of the server 202 suitable for receiving a modified version of the document 204 from client 216. The receiver 220 can be an integral part of the server 202 or can be combined with other components of the server 202.

The server 202 also includes a token generator 222 as a software or hardware component for generating a token for communication to the document modifier 218. The token is an identifier suitable for identifying a particular document modifier 218, a particular entity utilising the document modifier 218, such as a user, a particular client 216 or a particular request to modify the document 204. Preferably the token generator 222 generates a unique token for each different document modifier 218, user of the modifier 218, client 216 or request. The document modifier 218 associates the token with each additional modification record 228. For example, where a user modifies a document via modifier 218, the modifier 218 generates one or more additional modification records 228 for the modified version of the document 226. Each additional modification record has associated a token corresponding to the modifier 218, client 216, user or request that generated it. Similarly, modification records 206 stored for the document 204 have associated a token corresponding to a modifier 218, client 216, user or request that generated it. The token information can be associated with each of the modification records 206, 228 by annotating, marking, labelling, recording or other means of association.

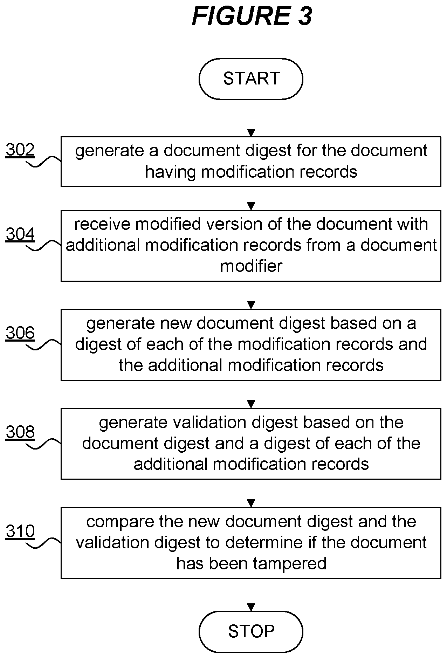

The server 202 further includes a document validator 214 as a software or hardware component for validating the modified version of the document 226 to identify tampering. The operation and function of the document validator 214 is described below with respect to Figure 3.

Figure 3 is a flowchart of a method for identifying tampering of an electronic document 204 in accordance with a preferred embodiment of the present invention. Initially, at step 302, the digest generator 212 generates a document digest for the document 204. The document digest is a cumulative digest of a set of digests generated for each modification record 206 associated with the document 204. Thus, at step 302 the digest generator 212 initially generates a document digest for each modification record 206 and generates a cumulative digest as a document digest. It will be appreciated by those skilled in the art that each of the modification records 206 may have a digest pre-generated and stored in association with the modification record 206.

Subsequently, at step 304, the receiver 220 receives a modified version of the document 226 with additional modification records 228 from the document modifier 218. The document modifier 218 accessed the document 204 and modified the document 204 to generate the modified version of the document 226. At step 306 the digest generator generates a new document digest for the modified version of the document 226. The new document digest is a cumulative digest of a set of digests generated for each of modification records 206' and additional modification records 228 associated with the modified version 226. Thus at step 306 the digest generator 212 initially generates a document digest for each of the modification records 206' and additional modification records 226 and generates a cumulative digest as a new document digest.

At step 308 the digest generator 212 generates a validation digest for the modified version of the document 226. The validation digest is a cumulative digest of: the document digest generated at step 302 for the document 204 prior to modification; and a digest generated for each of the additional modification records 228. Thus, at step 308, the digest generator 212 generates a document digest for each additional modification record 226 and generates a cumulative digest based on the original document digest and the additional modification record 226 digests.

It will be appreciated that the client 216 and document modifier 218 may include security or other weaknesses that are susceptible to exploitation and accordingly modification records 206', 228 associated with the modified version of the document 226 may be subject to tampering. For example, in an embodiment where modifier 218 employs javascript, users exploiting weaknesses in javascript security may tamper with a modification record 206 to modify the document 204 in such a way that the modification is not attributed to the modifier 218. In particular, such tampering can have the effect of applying a modification to the document 204, such modification not being properly attributed to the modifier 218 or a user of the modifier 218 by virtue of appropriate association of a token 222 corresponding to the modifier 218, client 216, user or request. Further, such modification may be made to or via a modification record 206 that pre-exists any modification by the modifier 218.

The new document digest generated at step 306 and the validation digest generated at step 308 can be used by the document validator 214 to identify tampering of the modified version of the document 226. The validation digest is based on the document digest generated at step 302 and not being transmitted to, or accessible by, the modifier 218. The new document digest is based on the modification records 206', 228 as associated with the modified version of the document 226. Thus, any tampering with the modification records 206' associated with the modified version 226 will be apparent from a comparison of the validation digest and the new document digest.

Accordingly, at step 310 the document validator 214 compares the new document digest generated at step 306 and the validation digest generated at step 308 to determine if the document has been tampered with. Where the new document digest and the validation digest differ, tampering is evident.

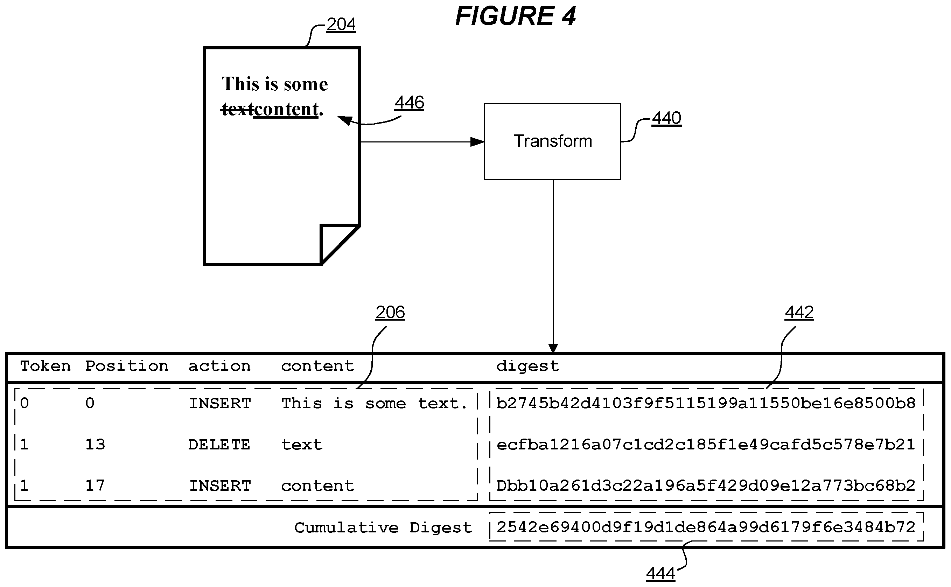

Figure 4 illustrates a document transformation in accordance with a preferred embodiment of the present invention. Document 204 is illustrated as including document content 446 that has undergone modification. Modification information for the document content 446 can be stored with the document 204 such as by way of metadata associated with the document. For example, change or revision history information for document 204 can constitute modification information. A transformation process 440 is operable to convert the document 204 into a series of modification records 206. Such transformation 440 can involve the extraction of modification information from the document 204 such that the modification information constitutes modification records 206. Alternatively, the transformation 440 can involve interpreting, parsing, converting or otherwise processing the document 204 so as to generate modification records 206. For example, change history information for document 204 can be processed to generate modification reecords 206. Each modification record 206 includes: a 'token' field corresponding to a token provided by the token generator 222 for a document modifier 218, client 216, user or request creating the modification record 206; a 'position' field identifying a position in the document at which a modification takes place; an 'action' field identifying a type of modification such as 'INSERT' or 'DELETE'; and a 'content' field including document content that is modified.

In accordance with step 302 of the method of Figure 3, the digest generator 212 is operable to generate a digest for each of the modification records 206. Digests 442 are exemplary hash values generated by the digest generator 212 for each of the modification records 206 using a suitable hashing algorithm. Further in accordance with step 302 of Figure 3, the digest generator 212 generates a cumulative digest 444 for the modification records 206. The cumulative digest 444 constitutes a document digest for document 204 based on the modification records 206 and is stored by the server 202 in association with the document 204.

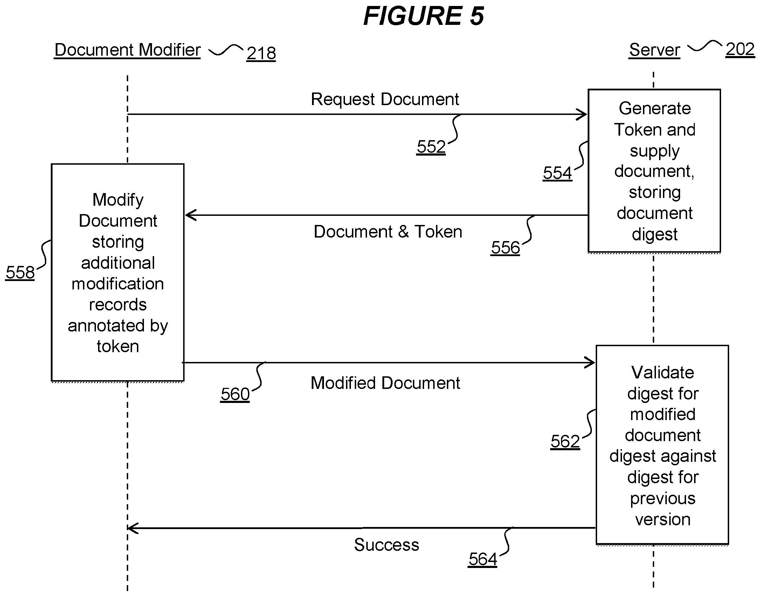

Figure 5 is a flow diagram illustrating the interaction between a document modifier 218 and a server 202 for the modification and validation of a document 204 in accordance with a preferred embodiment of the present invention. Initially the document modifier 218, the client 216 or an entity such as a user utilising the client 216 or modifier 218, requests the document 204 at step 552. At step 554 the token generator 222 generates a token for the request and supplies the token and document 204, including the modification records 206 for the document, to the document modifier 218 at step 556. At step 558 the document modifier 218 modifies the document so generating a modified version of the document 226 storing, along with modification records 206, additional modification records 228. The additional modification records 228 are annotated by the token supplied by the server 202 such that they are attributed to the particular request 552 to modify the document 204. At step 560 the modified version of the document 226 is sent to the server 202 which, at step 562, validates the digest for the modified document 226 by comparing a validation digest with a new document digest in accordance with the method of Figure 3 at step 310. If the server determines that the new document digest is the same as the validation digest the server determines, at step 564, that the document is not tampered with.

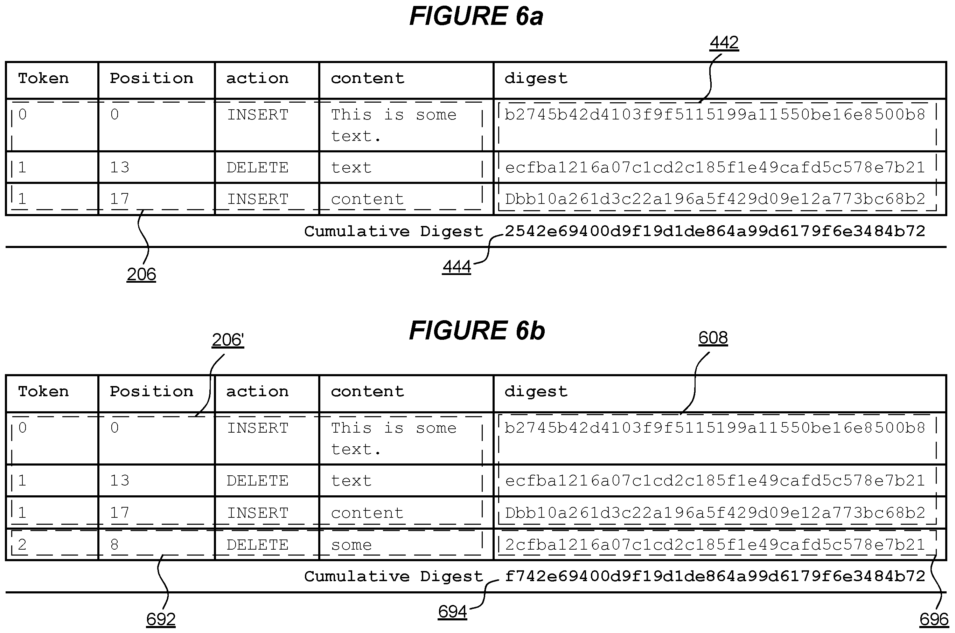

Figure 6a depicts modification records 206 and generated digests 442 for a document 204 in accordance with a preferred embodiment of a present invention. The cumulative digest 444 is stored by the server 202 for use in the validation step 310 of the method of Figure 3. Figure 6b depicts modification records 206', an additional modification record 692 and generated digests 608, 696, 694 for a modified version of a document 226 in accordance with a preferred embodiment of the present invention. To validate the modified version of the document 226, the cumulative digest 694 for the modified version of the document 226 is compared with a validation digest generated based on the cumulative digest 444 of the original document 204 and the digest 696 of the additional modification record 692. If there has been no tampering of modification records the validation digest will match the cumulative digest 694 for the modified version of the document 226.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented method for identifying tampering of an electronic document (204), the method comprising the steps of:
generating (302) a document digest for the document, the document having associated one or more modification records (210, 228, 692)and the document digest being a cumulative digest (444) based on a digest of each of the modification records;
receiving (304) a modified version of the document from a document modifier (218), the modified version (226) of the document having associated one or more additional modification records;
generating (306) a new document digest for the modified document, the new document digest being a cumulative digest based on a digest of each of the modification records and the additional modification records;
generating (308) a validation digest, the validation digest being a cumulative digest based on the document digest and a digest of each of the additional modification records;
comparing (310) the new document digest and the validation digest to determine if the modified version of the document has been tampered with;
the method **characterised in that** there is a token generator (222) to generate tokens for each of the modification records and the additional modification records such that there is a unique token from the generator (222) for each modification record and the modification records are recorded at a level of granularity such that each modification record (206, 228) corresponds to a discrete modification dependent upon the unique token.

2. The method of any preceding claim wherein the modification records (210) and the additional modification records (228) are ordered such that the modification records and additional modification records define a state of the document.

3. The method of claim 2 wherein, by virtue of the digests of each of the modification records (210) and each of the additional modification records (228) so that each document digest at any given state of the document is unique based upon the modification sequence that has been performed using the unique token, thereby ensuring that two documents having equal content are different dependent upon the unique token.

4. The method of any preceding claim wherein the document digest (442; 608, 696, 694), new document digest (226) and validation digest (308) are generated using a hashing algorithm.

5. The method of any preceding claim wherein the comparing step (310) determines if the document has been tampered with based on identifying a difference between the new document digest and the validation digest.

6. Apparatus (102) for identifying tampering of an electronic document (204), the document having associated one or more modification records (210), the apparatus comprising:
a modification record digest generator (212) for generating a digest for a modification record of the document;
a document digest generator (444, 694) for generating a cumulative digest based on a digest (608, 696, 442) of each of the modification records;
a receiver (220) for receiving a modified version (226) of the document from a document modifier (218), the modified version of the document having associated one or more additional modification records (228);
a document validator (214), operable in conjunction with the modification record digest generator and the document digest generator, to generate:
i) a new document digest for the modified document (226) based on a digest of each of the modification records (210) and the additional modification records (228); and
ii) a validation digest as a cumulative digest (444, 694) based on the document digest (302) and a digest of each of the additional modification records (228),
the apparatus **characterised in that** there is a token generator (222) to generate tokens for the modification records and the additional modification records such that there is a unique token for each modification record , the modification records are recorded at a level of granularity such that each modification record (206, 228) with unique token corresponds to a discrete modification, and
the document validator is further operable to compare (310) the new document digest and the validation digest to determine if the modified version of the document has been tampered with dependent upon the unique token.

7. The apparatus of claims 6 wherein the modification records and the additional modification records are ordered such that the modification records and additional modification records define a state of the document.

8. The apparatus of claim 7 wherein, by virtue of the digests of each of the modification records and each of the additional modification records such that the document digest at any given state of the document is unique based upon the modification sequence that has been performed using the unique token, thereby ensuring that two documents having equal content are different dependent upon the unique token.

9. The apparatus of any of claims 6 to 8 wherein the document digest, new document digest and validation digest are generated using a hashing algorithm.

10. The apparatus of any of claims 6 to 9 wherein the document validator determines if the document has been tampered with based on identifying a difference between the new document digest and the validation digest.

11. A computer program element (102) comprising computer program code to, when loaded into a computer system and executed thereon, cause the computer to perform the steps of a method as claimed in any of claims 1 to 5.

## Patentansprüche

1. Ein computerimplementiertes Verfahren für die Identifizierung einer Verfälschung eines elektronischen Dokuments (204), das Verfahren umfasst die folgenden Schritte:
Das Erstellen (302) eines Dokumentenauszugs für das Dokument, das Dokument ist mit einem oder mehreren Änderungsdatensätzen (210, 228, 692) verbunden und der Dokumentenauszug ist ein kumulativer Auszug (444), basierend auf einem Auszug jedes Änderungsdatensatzes;
Empfangen (304) einer veränderten Version des Dokuments von einem Dokumenten-Modifikator (218), die geänderte Version (226) des Dokuments ist mit einem oder mehreren zusätzlichen Änderungsdatensätzen verbunden;
Erstellen (306) eines neuen Dokumentenauszugs für das veränderte Dokument, der neue Dokumentenauszug ist ein kumulativer Auszug, basierend auf einem Auszug aus jedem der Änderungsdatensätze und der zusätzlichen Änderungsdatensätze;
Erstellen (308) eines Bestätigungsauszugs, der Bestätigungsauszug ist ein kumulativer Auszug, basierend auf dem Dokumentenauszug und einem Auszug aus jedem der zusätzlichen Änderungsdatensätze;
Vergleichen (310) des neuen Dokumentenauszugs und des Bestätigungsauszugs, um zu bestimmen, ob die veränderte Version des Dokuments verfälscht wurde;
das Verfahren **gekennzeichnet dadurch, dass** ein Token-Generator (222) vorhanden ist, der Token für jeden der Änderungsdatensätze und die zusätzlichen Änderungsdatensätze erstellt, so dass ein einzelner Token von dem Generator (222) für jeden Änderungsdatensatz vorhanden ist und die Änderungsdatensätze auf einer Granularitätsebene aufgezeichnet werden, so dass jeder Änderungsdatensatz (206, 228) einer eigenständigen Änderung abhängig von dem einzelnen Token entspricht.

2. Das Verfahren nach einem der vorhergehenden Ansprüche, wobei die Änderungsdatensätze (210) und die zusätzlichen Änderungsdatensätze (228) so geordnet sind, dass die Änderungsdatensätze und die zusätzlichen Änderungsdatensätze einen Status des Dokuments definieren.

3. Das Verfahren nach Anspruch 2, wobei, kraft der Auszüge aus jedem der Änderungsdatensätze (210) und jedem der zusätzlichen Änderungsdatensätze (228), jeder Dokumentenauszug in jedem gegebenen Status des Dokuments eindeutig ist, basierend auf der Änderungssequenz, die unter Einsatz des einzelnen Token ausgeführt wurde, um dadurch sicherzustellen, dass zwei Dokumente mit gleichem Inhalt, abhängig von dem einzigartigen Token, verschieden sind.

4. Das Verfahren nach einem der vorhergehenden Ansprüche, wobei der Dokumentenauszug (442; 608, 696, 694), der neue Dokumentenauszug (226) und der Bestätigungsauszug (308) unter Einsatz eines Hash-Algorithmus erzeugt werden.

5. Das Verfahren nach einem der vorhergehenden Ansprüche, wobei der Vergleichsschritt (310) bestimmt, ob das Dokument verfälscht wurde, basierend auf der Identifizierung eines Unterschieds zwischen dem neuen Dokumentenauszug und dem Bestätigungsauszug.

6. Apparat (102) für die Identifizierung einer Verfälschung eines elektronischen Dokuments (204), das Dokument ist dabei mit einem oder mehreren Änderungsdatensätzen (210) verbunden, der Apparat umfassend:
Einen Auszugs-Generator eines Änderungsdatensatzes (212) für die Erzeugung eines Auszugs für einen Änderungsdatensatz des Dokuments;
einen Generator eines Dokumentenauszugs (444, 694) für die Erzeugung eines kumulativen Auszugs, basierend auf einem Auszug (608, 696, 442) aus jedem der Änderungsdatensätze;
einen Empfänger (220) für den Empfang einer veränderten Version (226) des Dokuments von einem Dokumenten-Modifikator (218), die veränderte Version des Dokuments ist damit mit einem oder mehreren zusätzlichen Änderungsdatensätzen (228) verbunden;
einen Dokumenten-Validator (214), der in Verbindung mit dem Auszugs-Generator der Änderungsdatensätze und dem Generator des Dokumentenauszugs Folgendes erzeugen kann:
i) einen neuen Dokumentenauszug für das veränderte Dokument (226), basierend auf einem Auszug aus jedem der Änderungsdatensätze (210) und der zusätzlichen Änderungsdatensätze (228); und
ii) einen Bestätigungsauszug als kumulativen Auszug (444, 694), basierend auf dem Dokumentenauszug (302) und einem Auszug aus jedem der zusätzlichen Änderungsdatensätze (228),
der Apparat **gekennzeichnet dadurch, dass** ein Token-Generator (222) vorhanden ist, um Token für die Änderungsdatensätze und die zusätzlichen Änderungsdatensätze zu erzeugen, so dass ein eindeutiger Token für jeden Änderungsdatensatz vorhanden ist, die Änderungsdatensätze werden auf einer Granularitätsebene aufgezeichnet, so dass jeder Änderungsdatensatz (206, 228) mit einem eindeutigen Token einer separaten Änderung entspricht, der Dokumenten-Validator kann ferner (310) den neuen Dokumentenauszug und den Bestätigungsauszug vergleichen, um zu bestimmen, ob die veränderte Version des Dokuments, abhängig von dem eindeutigen Token, verfälscht wurde.

7. Der Apparat nach Anspruch 6, wobei die Änderungsdatensätze und die zusätzlichen Änderungsdatensätze so geordnet sind, dass die Änderungsdatensätze und die zusätzlichen Änderungsdatensätze einen Status des Dokuments definieren.

8. Der Apparat nach Anspruch 7, wobei, kraft der Auszüge aus jedem der Änderungsdatensätze und jedem der zusätzlichen Änderungsdatensätze, jeder Dokumentenauszug in jedem gegebenen Status des Dokuments eindeutig ist, basierend auf der Änderungssequenz, die unter Einsatz des einzelnen Token ausgeführt wurde, um dadurch sicherzustellen, dass zwei Dokumente mit gleichem Inhalt, abhängig von dem eindeutigen Token, verschieden sind.

9. Der Apparat nach einem der Ansprüche 6 bis 8, wobei der Dokumentenauszug, der neue Dokumentenauszug und der Bestätigungsauszug unter Einsatz eines Hash-Algorithmus erzeugt werden.

10. Der Apparat nach einem der vorhergehenden Ansprüche 6 bis 9 wobei der Dokumenten-Validator bestimmt, ob das Dokument verfälscht wurde, basierend auf der Identifizierung eines Unterschieds zwischen dem neuen Dokumentenauszug und dem Bestätigungsauszug.

11. Ein Computerprogramm-Element (102) umfassend einen Computerprogramm-Code, der, wenn er in ein Computersystem geladen und darin ausgeführt wird, den Computer veranlasst, die Schritte eines Verfahrens nach einem der Ansprüche 1 bis 5 auszuführen.

## Revendications

1. Procédé mis en œuvre par ordinateur destiné à identifier la falsification d'un document électronique (204), le procédé comprenant les étapes consistant à :
générer (302) un condensé de document pour le document, le document ayant associé un ou plusieurs enregistrements de modification (210, 228, 692) et le condensé de document en tant qu'un condensé cumulatif (444) basé sur un condensé de chacun des enregistrements de modification ;
recevoir (304) une version modifiée du document provenant d'un modificateur de document (218), la version modifiée (226) du document ayant associé un ou plusieurs enregistrements de modification supplémentaires ;
générer (306) un nouveau condensé de document pour le document modifié, le nouveau condensé de document en tant qu'un condensé cumulatif basé sur un condensé de chacun des enregistrements de modification et des enregistrements de modification supplémentaires ;
générer (308) un condensé de validation, le condensé de validation en tant qu'un condensé cumulatif basé sur le condensé de document et un condensé de chacun des enregistrements de modification supplémentaires ;
comparer (310) le nouveau condensé de document et le condensé de validation pour déterminer si la version modifiée du document a été falsifiée ;
le procédé est **caractérisé en ce qu'**il existe un générateur de jetons (222) pour générer des jetons pour chacun des enregistrements de modification et des enregistrements de modification supplémentaires de sorte qu'il existe un jeton unique provenant du générateur (222) pour chaque enregistrement de modification et que les enregistrements de modification sont enregistrés à un niveau de granularité de sorte que chaque enregistrement de modification (206, 228) correspond à une modification discrète en fonction du jeton unique.

2. Procédé selon une quelconque revendication précédente dans lequel les enregistrements de modification (210) et les enregistrements de modification supplémentaires (228) sont ordonnés de sorte que les enregistrements de modification et les enregistrements de modification supplémentaires définissent un état du document.

3. Procédé selon la revendication 2, dans lequel, en raison des condensés de chacun des enregistrements de modification (210) et de chacun des enregistrements de modification supplémentaires (228) de manière à ce que chaque document condensé à un état donné du document soit unique basé sur la séquence de modification qui a été effectuée à l'aide du jeton unique, ce qui permet de garantir que deux documents présentant un contenu égal sont différents en fonction du jeton unique.

4. Procédé selon une quelconque revendication précédente dans lequel le condensé de document (442 ; 608, 696, 694), le nouveau condensé de document (226) et le condensé de validation (308) sont générés à l'aide d'un algorithme de hachage.

5. Procédé selon une quelconque revendication précédente dans lequel l'étape de comparaison (310) détermine si le document a été falsifié basé sur l'identification d'une différence entre le nouveau condensé de document et le condensé de validation.

6. Appareil (102) destiné à identifier la falsification d'un document électronique (204), le document ayant associé un ou plusieurs enregistrements de modification (210), l'appareil comprenant :
un générateur de condensés d'enregistrement de modification (212) destiné à générer un condensé pour un enregistrement de modification du document ;
un générateur de condensés de document (444, 694) destiné à générer un condensé cumulatif basé sur un condensé (608, 696, 442) de chacun des enregistrements de modification ;
un récepteur (220) destiné à recevoir une version modifiée (226) du document provenant d'un modificateur de document (218), la version modifiée du document ayant associé un ou plusieurs enregistrements de modification supplémentaires (228) ;
un validateur de document (214), utilisable en association avec le générateur de condensés d'enregistrement de modification et le générateur de condensés de documents, pour générer :
i) un nouveau condensé de document pour le document modifié (226) basé sur un condensé de chacun des enregistrements de modification (210) et des enregistrements de modification supplémentaires (228) ; et
ii) un condensé de validation en tant que condensé cumulatif (444,694) basé sur le condensé de document (302) et un condensé de chacun des enregistrements de modification supplémentaires (228),
l'appareil **caractérisé en ce qu'**il existe un générateur de jetons (222) pour générer des jetons pour les enregistrements de modification et les enregistrements de modification supplémentaires de sorte qu'il existe un jeton unique pour chaque enregistrement de modification, les enregistrements de modification sont enregistrés à un niveau de granularité tel que chaque enregistrement de modification (206, 228) avec un jeton unique correspond à une modification discrète, et le validateur de document utilisable pour comparer en outre (310) le nouveau condensé de document et le condensé de validation pour déterminer si la version modifiée du document a été falsifiée en fonction du jeton unique.

7. Appareil selon la revendication 6, dans lequel les enregistrements de modification et les enregistrements de modification supplémentaires sont ordonnés de sorte que les enregistrements de modification et les enregistrements de modification supplémentaires définissent un état du document.

8. Appareil selon la revendication 7, dans lequel, en raison des condensés de chacun des enregistrements de modification et de chacun des enregistrements de modification supplémentaires de sorte que chaque document condensé à un état donné du document soit unique basé sur la séquence de modification qui a été effectuée à l'aide du jeton unique, ce qui permet de garantir que deux documents présentant un contenu égal sont différents en fonction du jeton unique.

9. Appareil selon l'une quelconque des revendications 6 à 8 dans lequel le condensé de document, le nouveau condensé de document et le condensé de validation sont générés à l'aide d'un algorithme de hachage.

10. Appareil de l'une quelconque des revendications 6 à 9 dans lequel le validateur de document détermine si le document a été falsifié basé sur l'identification d'une différence entre le nouveau condensé de document et le condensé de validation.

11. Élément de programme informatique (102) comprenant un code de programme informatique pour, lorsqu'il est chargé dans un système informatique et exécuté sur celui-ci, amener l'ordinateur à effectuer les étapes d'un procédé tel que revendiqué dans l'une des revendications 1 à 5.
